# EUROPÄISCHE PATENTANMELDUNG

(11) **EP 3 029 775 A1**
(43) Veröffentlichungstag der Anmeldung: **08.06.2016**
(21) Anmeldenummer: 15162426.9
(22) Anmeldetag: 02.04.2015
(51) Int. Cl.: H01R 4/48, H02G 3/32

(54) **KLAMMER**

(30) Priorität: 05.12.2014 DE 102014117999
(71) Anmelder: HEBOTEC GmbH, 72116 Mössingen (DE)
(72) Erfinder: Hermann, Gerold, 72108 Rottenburg-Obernau (DE); Böhringer, Markus, 72116 Mössingen (DE)
(74) Vertreter: Kohler Schmid Möbus Patentanwälte

(57) **Zusammenfassung**

Bei einer Klammer (10) mit einem Fußteil (11) und zumindest zwei sich vom Fußteil (11) erstreckenden Schenkeln (12, 13), zwischen denen ein Kabel, eine Leitung oder dergleichen, insbesondere klemmend, aufnehmbar ist, sowie einer mit dem Fußteil (11) verbundenen Befestigungslasche (14) sind die Befestigungslasche (14) und das Fußteil (11) einstückig ausgebildet.

## Beschreibung

Die Erfindung betrifft eine Klammer mit einem Fußteil und zumindest zwei sich vom Fußteil erstreckenden Schenkeln, zwischen denen ein Kabel, eine Leitung oder dergleichen, insbesondere klemmend, aufnehmbar ist, sowie einer mit dem Fußteil verbundenen Befestigungslasche.

Eine solche Klammer ist beispielsweise aus der DE 102 30 072 A1 bekannt geworden. Bei der dort offenbarten Klammer muss die Befestigungslasche, beispielsweise mittels Nieten, mit dem Fußteil der Klammer verbunden werden, was einen zusätzlichen Arbeitsschritt bedeutet. Außerdem ist die Befestigungslasche stufenförmig ausgebildet, wodurch verhindert wird, dass die Klammer mit geringem Abstand an einem Träger befestigt werden kann. Durch die Stufe erhält die Gesamtanordnung auch eine gewisse Instabilität.

Aufgabe der vorliegenden Erfindung ist es, diesbezüglich Abhilfe zu schaffen.

Gelöst wird diese Aufgabe erfindungsgemäß durch eine Klammer mit einem Fußteil und zumindest zwei sich vom Fußteil erstreckenden Schenkeln, zwischen denen ein Kabel, eine Leitung oder dergleichen, insbesondere klemmend, aufnehmbar ist, sowie einer mit dem Fußteil verbundenen Befestigungslasche, wobei die Befestigungslasche und das Fußteil einstückig ausgebildet sind. Dadurch, dass die Befestigungslasche und das Fußteil einstückig ausgebildet sind, muss die Befestigungslasche nicht extra, beispielsweise mittels eines Niets, am Fußteil befestigt werden. Insbesondere kann die gesamte Klammer aus einem Metallstreifen ausgeschnitten oder ausgestanzt werden und anschließend die Schenkel von dem Fußteil abgebogen werden. Somit kann die gesamte Klammer einstückig ausgebildet sein. Durch die einstückige Ausbildung ergibt sich außerdem eine stabilere Verbindung der Befestigungslasche mit dem Fußteil bzw. der übrigen Klammer. Außerdem lässt sich das Fußteil nicht relativ zu der Befestigungslasche verdrehen, wie dies bei der Klammer gemäß dem Stand der Technik passieren könnte.

Besondere Vorteile ergeben sich, wenn die Befestigungslasche stufenfrei ausgebildet ist und insbesondere in derselben Ebene angeordnet ist wie das Fußteil. Dadurch lässt sich eine besonders flache Befestigung der Klammer realisieren. Außerdem kann eine stabilere Befestigung erfolgen, da sowohl die Befestigungslasche zur Befestigung mit einem Träger herangezogen werden kann als auch das Fußteil selbst. Somit können zumindest zwei Befestigungspunkte sichergestellt werden.

Ein weiterer Vorteil der Anordnung von Befestigungslasche und Fußteil in derselben Ebene ist, dass die Befestigungslasche und das Fußstück großflächig auf einem (metallischen) Träger aufliegen können und dadurch hochfrequente Ströme sehr gut abgeleitet werden können.

Die Befestigungslasche kann eine Befestigungsöffnung aufweisen. Mittels dieser Befestigungsöffnung kann die Befestigungslasche an einem Träger beispielsweise vernietet oder verschraubt werden.

Besondere Vorteile ergeben sich, wenn die Befestigungsöffnung in einem vorgegebenen Abstand zu den Schenkeln angeordnet wird. Insbesondere kann die Lage der Befestigungsöffnung so gewählt werden, dass eine automatische Bestückung der Klammer an einem Träger erfolgen kann. Dies ist beispielsweise dann nicht möglich, wenn lediglich eine Befestigungsöffnung im Fußteil vorgesehen ist.

Der Mindestabstand vom inneren Rand der Befestigungsöffnung zu einem Schenkel der Klammer beträgt vorzugsweise 2 mm.

Weitere Vorteile ergeben sich, wenn das Fußteil eine Ausrichthilfe und/oder Verdrehsicherung aufweist. Dabei kann eine Ausrichthilfe gleichzeitig als Verdrehsicherung wirken. Insbesondere kann das Fußteil eine Durchgangsöffnung oder einen Zapfen aufweisen. Der Zapfen könnte mit einem Loch in einem Träger zusammenwirken. Alternativ, wenn die Ausrichthilfe und/oder Verdrehsicherung als Durchgangsöffnung ausgebildet ist, kann ein Zapfen in diese Öffnung ragen, um damit die Lage der Klammer festzulegen.

Gemäß einer besonders bevorzugten Ausführungsform kann vorgesehen sein, dass die Ausrichthilfe und/oder die Verdrehsicherung exzentrisch am Fußteil angeordnet ist. Insbesondere kann die Ausrichthilfe und/oder Verdrehsicherung, also beispielsweise eine Durchgangsöffnung, außermittig so am Fußteil angeordnet werden, dass die Federkraft der Schenkel symmetrisch ist und sich die Schenkel nicht verdrehen.

Weitere Vorteile ergeben sich, wenn die Verdrehsicherung einen unrunden Querschnitt aufweist. Beispielsweise kann die Verdrehsicherung als mehreckiges, elliptisches oder ovales Loch ausgebildet sein. Weiterhin ist es denkbar, dass die Verdrehsicherung als so genanntes Augenloch ausgebildet ist. So kann die Klammer, ehe die Befestigungslasche befestigt wird, schon in der richtigen Lage und verdrehsicher positioniert werden.

Eine noch zuverlässigere Befestigung der Klammer kann erreicht werden, wenn beidseits des Fußteils jeweils eine Befestigungslasche angeordnet ist. Insbesondere kann auch die zweite Befestigungslasche einstückig mit dem Fußteil ausgebildet sein. Auch die zweite Befestigungslasche kann stufenfrei ausgebildet sein und insbesondere gleich ausgebildet sein wie die erste Befestigungslasche. Die erste und/oder zweite Befestigungslasche erstrecken sich vorzugsweise in eine Richtung, die einer Kabelverlaufsrichtung entspricht.

Das Einführen eines Kabels oder einer Leitung kann erleichtert werden, wenn die Schenkel an ihren freien Enden Einführabschnitte aufweisen, die gebogen sind. Die Einführabschnitte sind dabei vorzugsweise nach außen gebogen. Beim Eindrücken und Öffnen der Klammer kann somit der Anlagewinkel an der Leitung oder an dem Kabel konstant bleiben oder sich sogar verkleinern und so das Eindrücken auch bei steigender Federkraft erleichtert werden.

Besonders vorteilhaft ist es, wenn die Schenkel Ausbuchtungen zur Aufnahme eines Kabels, einer Leitung oder dergleichen aufweisen, wobei die Ausbuchtungen in einem dem Fußteil abgewandten Bereich, insbesondere in einem an die Einführabschnitte angrenzenden Bereich, weniger stark gekrümmt sind als in einem dem Fußteil näheren Bereich. Damit wird eine größere Auszugskraft erreicht. Das Kabel oder die Leitung wird zuverlässiger durch die Klammer gehalten.

Gemäß einer Ausgestaltung der Erfindung kann vorgesehen sein, dass die Klammer einen Zugentlastungsabschnitt aufweist. Somit können Kabel, die durch die Klammer aufgenommen werden, zusätzlich fixiert werden, um eine Relativbewegung zwischen dem Kabel und der Klammer zu verhindern.

Der Zugentlastungsabschnitt kann in einer anderen Ebene angeordnet sein als das Fußteil. Insbesondere kann der Zugentlastungsabschnitt stufenförmig ausgebildet sein und in einer Ebene angeordnet sein, die parallel zur Ebene des Fußteils liegt. Dadurch ist der Zugentlastungsabschnitt für ein Befestigungsmittel, wie beispielsweise einen Kabelbinder, auch von unten zugänglich. Der Zugentlastungsabschnitt kann eine, vorzugsweise zwei gegenüberliegende Ausnehmungen aufweisen, in denen ein Befestigungsmittel zu liegen kommen kann, sodass dieses sich nicht einfach vom Zugentlastungsabschnitt lösen lässt.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: eine perspektivische Ansicht einer Klammer;
- Fig. 2: eine Seitenansicht der Klammer;
- Fig. 3: eine perspektivische Ansicht einer weiteren Klammer;
- Fig. 4: eine Seitenansicht der Klammer aus Fig. 3.

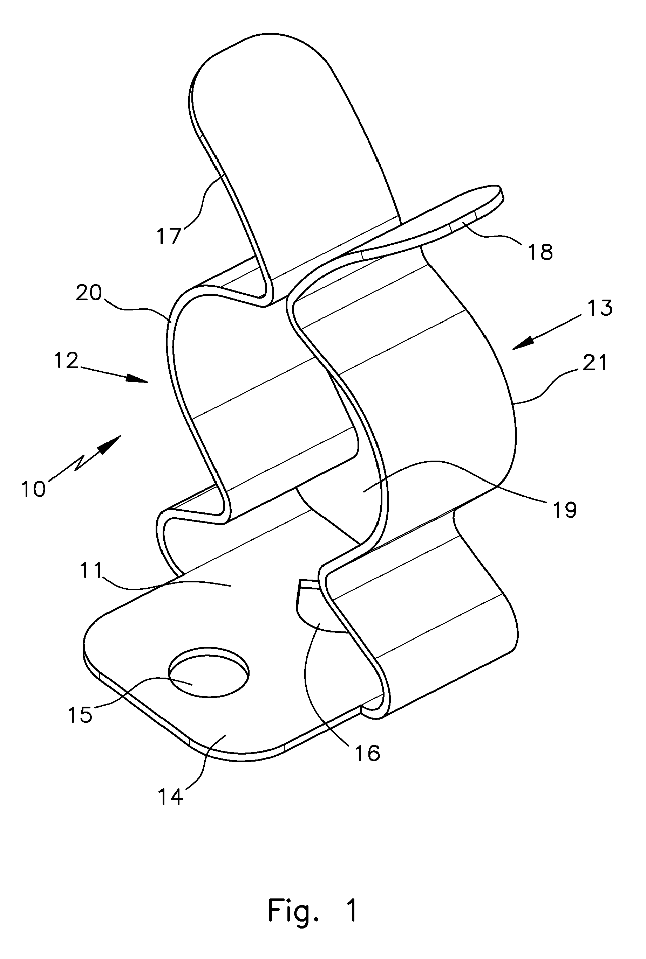

Die Fig. 1 zeigt eine Klammer 10, die ein Fußteil 11 umfasst, von dem sich zwei Schenkel 12, 13 erstrecken. An das Fußteil 11 schließt sich einstückig eine Befestigungslasche 14 an, die stufenfrei ausgebildet ist und die gleiche Breite wie das Fußteil 11 aufweist. Insbesondere befinden sich das Fußteil 11 und die Befestigungslasche 14 in derselben Ebene. Die Befestigungslasche 14 befindet sich neben den Schenkeln 12, 13 und erstreckt sich insbesondere in eine Richtung, die parallel zu einer Richtung ausgerichtet ist, die ein zwischen den Schenkeln 12, 13 eingeklemmtes Kabel einnimmt. Die Befestigungslasche 14 weist eine Befestigungsöffnung 15 auf, deren Abstand von den Schenkeln 12, 13 so gewählt ist, dass eine automatische Bestückung der Klammer 10 möglich ist. Im gezeigten Ausführungsbeispiel ist die Befestigungsöffnung 15 kreisrund dargestellt. Grundsätzlich sind jedoch auch andere Querschnittsformen denkbar.

Auch die Schenkel 12, 13 können einstückig mit dem Fußteil 11 verbunden sein. Dadurch lässt sich die Klammer 10 besonders einfach herstellen. Im Fußteil 11 ist eine Verdrehsicherung 16 angeordnet, die auch als Ausrichthilfe dienen kann. Die Verdrehsicherung 16 weist einen unrunden Querschnitt auf, sodass mittels eines entsprechend geformten Zapfens die Klammer 10 drehfest festgelegt werden kann. Eine Verdrehsicherung ergibt sich jedoch auch durch Zusammenwirkung mit der Befestigungsöffnung 15. Wenn nämlich die Klammer 10 sowohl an der Befestigungsöffnung 15 als auch an der Verdrehsicherung 16 mittels einer Schraube oder eines Niets befestigt wird, oder auch, wenn statt einer Schraube oder eines Niets nur ein Zapfen in die Verdrehsicherung ragt, ist die Klammer 10 drehfest festgelegt.

Eine der Befestigungslasche 14 entsprechende Befestigungslasche könnte sich auch auf der gegenüberliegenden Seite an der Klammer 10 befinden.

Die Klammer 10 weist an ihren Schenkeln 12, 13 Einführabschnitte 17, 18 auf, die gebogen sind. Dadurch lässt sich ein Kabel leichter einführen, indem das Kabel mit Druck auf die Einführabschnitte 17, 18 gelegt wird. Dadurch weiten sich die Schenkel 12, 13, die als Federschenkel ausgebildet sein können, auf, bis das Kabel oder die Leitung in den Raum 19 gelangt, der durch die Ausbuchtungen 20, 21 der Schenkel 12, 13 definiert wird.

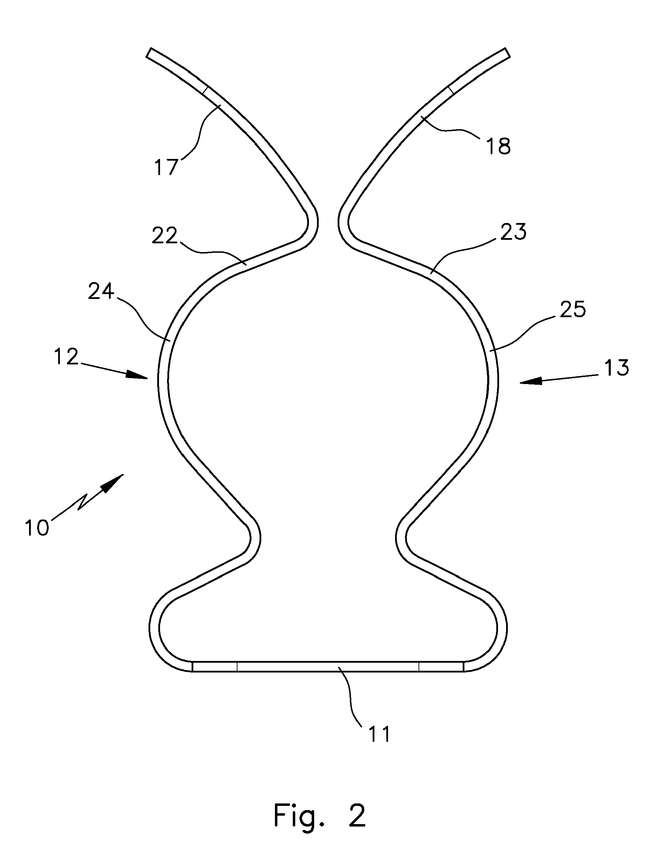

Der Fig. 2, die eine Seitenansicht der Klammer 10 zeigt, kann man entnehmen, dass das Fußteil 11 flach ausgebildet ist. Entsprechend ist der Befestigungsabschnitt 14 flach ausgebildet. Hier ist auch zu erkennen, dass die Einführabschnitte 17, 18 etwas nach außen gebogen sind.

Die Abschnitte 22, 23 der Federschenkel 12, 13 sind weniger stark gebogen bzw. weisen einen größeren Radius auf als die Abschnitte 24, 25, die näher am Fußteil 11 angeordnet sind. Dadurch, dass die Abschnitte 22, 23 flacher sind, wird es erschwert, das Kabel oder die Leitung wieder zu entfernen.

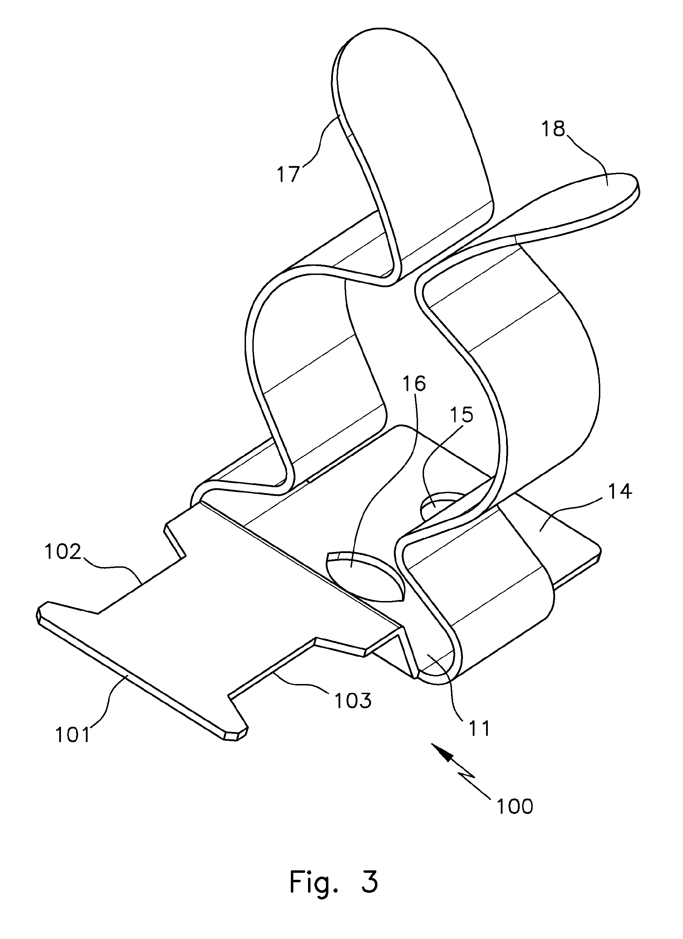

Die Fig. 3 zeigt eine weitere Ausgestaltung einer Klammer 100 in perspektivischer Ansicht. Teile der Klammer 100, die denen des vorhergehenden Ausführungsbeispiels entsprechen, tragen die gleiche Bezugsziffer. Die Klammer 100 weist zusätzlich einen Zugentlastungsabschnitt 101 auf, der in einer Ebene angeordnet ist, die parallel zur Ebene des Fußteils 11 liegt. Insbesondere ist der Zugentlastungsabschnitt 101 stufenförmig von dem Fußteil 11 abgekantet und einstückig mit diesem verbunden. Der überwiegende Teil des Zugentlastungsabschnitts 101 liegt oberhalb des Fußteils 11. Der Zugentlastungsabschnitt 101 weist seitliche Ausnehmungen 102, 103 auf, in denen ein Befestigungsmittel, wie beispielsweise ein Kabelbinder, zu liegen kommen kann. Dadurch kann ein Kabel auf dem Zugentlastungsabschnitt 101 fixiert werden.

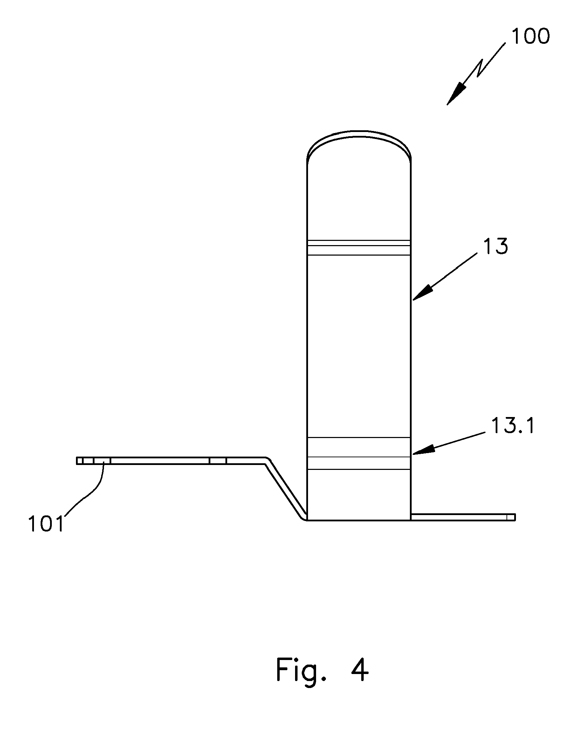

Fig. 4 zeigt die Klammer 100 in der Seitenansicht. Daraus ist zu erkennen, dass durch die Abstufung der Zugentlastungsabschnitt 101 auf der gleichen Höhe liegt wie eine untere Einschnürung 13.1 der Schenkel 12, 13 der Klammer 100, sodass ein in der Klammer 100 fixiertes Kabel auf dem Abschnitt 106 aufliegt.

## Patentansprüche

1. Klammer (10) mit einem Fußteil (11) und zumindest zwei sich vom Fußteil erstreckenden Schenkeln (12, 13), zwischen denen ein Kabel, eine Leitung oder dergleichen, insbesondere klemmend, aufnehmbar ist, sowie einer mit dem Fußteil (11) verbundenen Befestigungslasche (14), **dadurch gekennzeichnet, dass** die Befestigungslasche (14) und das Fußteil (11) einstückig ausgebildet sind.

2. Klammer nach Anspruch 1, **dadurch gekennzeichnet, dass** die Befestigungslasche (14) stufenfrei ausgebildet ist und insbesondere in derselben Ebene angeordnet ist wie das Fußteil (11).

3. Klammer nach einem der vorhergehenden Ansprüche, **dadurch gekennzeichnet, dass** die Befestigungslasche (14) eine Befestigungsöffnung (15) aufweist.

4. Klammer nach einem der vorhergehenden Ansprüche, **dadurch gekennzeichnet, dass** das Fußteil (11) eine Ausrichthilfe und/oder Verdrehsicherung (16) aufweist.

5. Klammer nach Anspruch 4, **dadurch gekennzeichnet, dass** die Ausrichthilfe und/oder die Verdrehsicherung (16) exzentrisch am Fußteil (11) angeordnet ist.

6. Klammer nach Anspruch 4 oder 5, **dadurch gekennzeichnet, dass** die Verdrehsicherung (16) einen unrunden Querschnitt aufweist.

7. Klammer nach einem der vorhergehenden Ansprüche, **dadurch gekennzeichnet, dass** beidseitig des Fußteils (11) jeweils eine Befestigungslasche (14) angeordnet ist.

8. Klammer nach einem der vorhergehenden Ansprüche, **dadurch gekennzeichnet, dass** die Schenkel (12, 13) an ihren freien Enden Einführabschnitte (17, 18) aufweisen, die gebogen sind.

9. Klammer nach einem der vorhergehenden Ansprüche, **dadurch gekennzeichnet, dass** die Schenkel (12, 13) Ausbuchtungen (20, 21) zur Aufnahme eines Kabels, einer Leitung oder dergleichen aufweisen, wobei die Ausbuchtungen (20, 21) in einem dem Fußteil abgewandten Bereich (22, 23), insbesondere in einem an die Einführabschnitte (17, 18) angrenzenden Bereich, weniger stark gekrümmt sind als in einem fußteilnäheren Bereich (24, 25).

10. Klammer nach einem der vorhergehenden Ansprüche, **dadurch gekennzeichnet, dass** die Klammer einen Zugentlastungsabschnitt aufweist.

11. Klammer nach Anspruch 11, **dadurch gekennzeichnet, dass** der Zugentlastungsabschnitt in einer anderen Ebene angeordnet ist als das Fußteil.
